# EUROPEAN PATENT SPECIFICATION

(11) **EP 3 567 608 B1**
(45) Date of publication and mention of the grant of the patent: **08.09.2021**
(21) Application number: 18735944.3
(22) Date of filing: 02.01.2018
(51) Int. Cl.: G21C 15/18

(54) **NUCLEAR POWER PLANT HAVING IMPROVED COOLING PERFORMANCE**
KERNKRAFTANLAGE MIT VERBESSERTER KÜHLLEISTUNG
CENTRALE NUCLÉAIRE AYANT DES PERFORMANCES DE REFROIDISSEMENT AMÉLIORÉES

(30) Priority: 03.01.2017 KR 20170000816; 09.11.2017 KR 20170148805
(43) Date of publication of application: 13.11.2019
(73) Proprietor: Korea Hydro & Nuclear Power Co., Ltd, Gyeongju-si, Gyeongsangbuk-do 38120 (KR)
(72) Inventor: KIM, Han Gon, Daejeon 34070 (KR); LEE, Sang Won, Daejeon 34049 (KR); HEO, Sun, Daejeon 35355 (KR); HA, Hui Un, Daejeon 34082 (KR)
(74) Representative: Habermann, Hruschka & Schnabel
(86) International application number: PCT/KR2018/000003
(87) International publication number: WO 2018/128337

(56) References cited:
- EP-A2- 0 232 186
- JP-B2- 2 977 234
- KR-A- 20020 043 080
- KR-A- 20110 104 736
- KR-B1- 100 320 831
- KR-B1- 101 071 415
- US-A- 5 180 543
- US-A- 5 268 943

## Description

### [Technical Field]

The present invention relates to a nuclear power plant with improved cooling performance.

### [Background Art]

An active emergency core cooling system of the nuclear power plant is configured to have a pump (high pressure injection pump, low pressure injection pump, etc.), accumulator (safety injection tank, etc.) and a coolant tank. When a normal heat removal through steam generators and turbines is not available, the active emergency core cooling system injects directly emergency coolant into the reactor coolant system (hot-leg or cold-leg, reactor vessel) to cool the reactor core.

A safety injection tank employs a safety injection tank containing a pressurized gas. When the pressure of the reactor vessel becomes lower than the pressure of the safety injection tank, the safety injection tank supplies the coolant therein to the nuclear reactor. However, when the pressure of the reactor vessel and/or the reactor coolant system is higher than the pressure of the safety injection tank, there is a problem that the coolant of the safety injection tank may not be supplied to the reactor vessel and/or the reactor coolant system.

Further, the pump of the active emergency core cooling system supplies the coolant of the coolant tank to the reactor vessel using the driving force from a motor. Thus, there is a problem that the pump cannot be used when there is no power (AC power).

For example, from US 5,268,943 A a nuclear power plant according to the preamble of claim 1 is known. Other plants with particular cooling configurations are known from EP 0 232 186 A2 and US 5,180,543 A.

### [Disclosure]

### [Technical Problem]

A purpose of the present invention is therefore to provide a nuclear power plant with improved cooling performance.

### [Technical Solution]

The present invention provides a nuclear power plant with improved cooling performance having the features of claim 1.

There is proposed a nuclear power plant with improved cooling performance, the plant comprising among other things: a reactor vessel containing a reactor core; a hot-leg and a cold-leg extending from the nuclear reactor; a hybrid safety injection tank for containing coolant therein, wherein the hybrid safety injection tank is connected to the cold-leg and the nuclear reactor, and the hybrid safety injection tank is located above the nuclear reactor; a coolant tank connected to the reactor vessel and positioned above the nuclear reactor; and a pressure-reducing valve connected to the high-temperature pipe.

The nuclear power plant further comprises a regulating valve located between the hybrid safety injection tank and the low-temperature pipe.

The reactor vessel further comprises a downcomer, wherein the coolant of the hybrid safety injection tank is supplied to the downcomer.

The coolant of the hybrid safety injection tank is supplied to a lateral face of the nuclear reactor.

The nuclear power plant further comprises: a steam generator connected to the high-temperature pipe and the low-temperature pipe. According to the invention, the nuclear power plant further comprises a pressurizer connected to the high-temperature pipe; and a pressure relief valve connected to the pressurizer, wherein the hybrid safety injection tank is not affected by a pressure change resulting from operation of the pressure relief valve.

The coolant of the hybrid safety injection tank is pressurized by pressurized gas, wherein the coolant of the coolant tank is supplied to a lateral face of the nuclear reactor.

The nuclear power plant further comprises a safety injection tank containing a coolant and connected to the reactor vessel and positioned above the nuclear reactor, wherein the safety injection tank is pressurized by a pressurizing gas.

The nuclear power plant further comprises a heat-exchanger to condense vapor inside a reactor building, wherein condensed water produced in the heat exchanger is supplied to the coolant tank.

### [Advantageous Effects]

In accordance with the present invention, the nuclear power plant with improved cooling performance may be realized.

### [Description of Drawings]

FIG. 1 shows a nuclear power plant according to one embodiment of the present invention.
FIG. 2 to FIG. 4 illustrate operation of a nuclear power plant according to one embodiment of the present invention.

### [Mode for Invention]

The present invention will now be described in more detail with reference to the drawings.

The accompanying drawings are merely illustrative examples for the purpose of more specifically describing the technical idea of the present invention, and thus the idea of the present invention is not limited to the accompanying drawings. Further, the accompanying drawings may be exaggerated in size and spacing in order to describe the relationship between components.

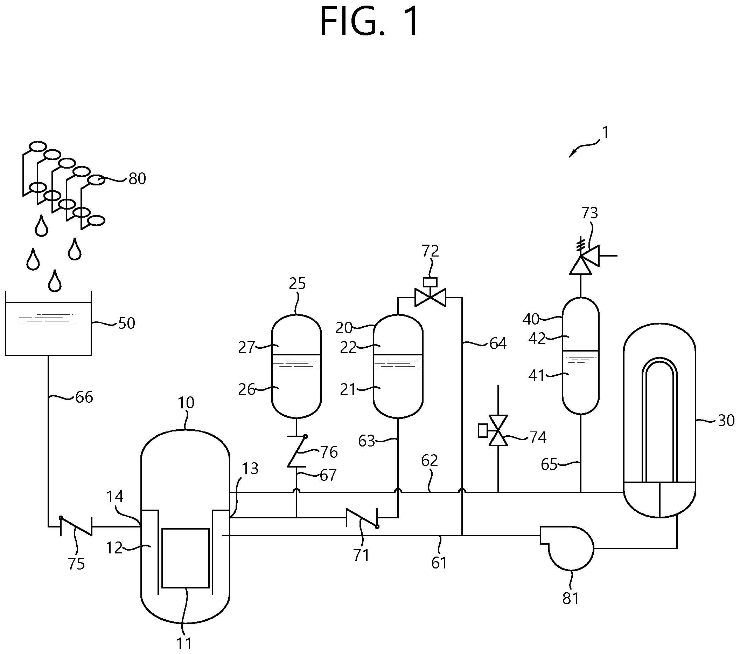

FIG. 1 shows a nuclear power plant according to one embodiment of the present invention.

The nuclear power plant 1 comprises a reactor vessel 10, a hybrid safety injection tank 20, a safety injection tank 25, a steam generator 30, a pressurizer 40, a coolant tank 50 and a heat-exchanger 80. In addition, the nuclear power plant 1 comprises cold-leg 61, hot-leg 62, various pipes 63 to 67, and various valves 71 to 76.

The reactor vessel 10 comprises a reactor core 11, a downcomer 12, and coolant injection portions 13 and 14. The coolant injection portions 13 and 14 are located on the side wall of the reactor vessel 10 and communicate with the downcomer 12.

In a normal operation mode, heated pressurized coolant(coolant water) produced in the reactor vessel 10 is discharged to the high-temperature pipe 62 and then is heat-exchanged in the steam generator 30 to generate steam, and then returned to the reactor vessel 10 through the cold-leg 61.

The pressurizer 40 is connected to the high-temperature pipe 62 via a pipe 65 and controls the system pressure during a nuclear power plant operation. The space within the pressurizer 40 may be divided into a lower space 41 and an upper space 42. The lower space 41 may contain coolant and the upper space 42 may contain steam. A pressure relief valve 73 is located above the pressurizer 40. When the reactor coolant system is pressurized above the operation pressure, the pressure-relief valve 73 is automatically opened to prevent damage to the coolant system. Opening the pressure relief valve 73 may allow fluid to be released to the outside such that the pressure of the coolant system is lowered.

The high-temperature pipe 62 is connected to a pressure-reducing valve 74. When the pressure-reducing valve 74 is opened, the pressure of the high-temperature pipe 62 is reduced.

The hybrid safety injection tank 20 is located above the reactor vessel 10. The top of the hybrid safety injection tank 20 is connected to the cold-leg 61 through a pipe 64. The bottom of the hybrid safety injection tank 20 is connected to the coolant injection portion 13 through a pipe 63.

The lower space 21 of the hybrid safety injection tank 20 is filled with coolant and its upper space 22 is filled with pressurizing gas. The pressure of the pressurizing gas in the hybrid safety injection tank 20 may be in a range of 40 to 100 atm. The pressurizing gas may be nitrogen gas and the coolant may contain boric acid.

A check valve 71 is located on the pipe 63 between the hybrid safety injection tank 20 and the reactor vessel 10. The flow of coolant from the reactor vessel 10 to the hybrid safety injection tank 20 is limited by the check valve 71.

On the pipe 64 connecting the hybrid safety injection tank 20 and the cold-leg 61, an adjustment valve 72 is located. The regulating valve 72 remains closed during a normal operation. At this time, when the pressure of the reactor vessel 10 is lower than the pressure of the hybrid safety injection tank 20, the coolant of the hybrid safety injection tank 20 is supplied to the reactor vessel 10.

The safety injection tank 25 is located above the reactor vessel 10. The bottom of the safety injection tank 25 is connected to the coolant injection portion 13 through a pipe 67.

The lower space 26 of the safety injection tank 25 is filled with coolant and its upper space 27 is filled with pressurizing gas. The pressure of the pressurizing gas in the safety injection tank 25 may be in a range of 40 to 100 atm. The pressurizing gas may be nitrogen gas and the coolant may contain boric acid.

The check valve 76 is located on the pipe 67 between the safety injection tank 25 and the reactor vessel 10. The coolant flow in the direction from the reactor vessel 10 to the safety injection tank 25 is limited by the check valve 76.

The coolant tank 50 is at atmospheric pressure and is located higher than the reactor vessel 10. The coolant tank 50 is connected to the reactor vessel 10 through a pipe 66. Specifically, the coolant in the tank 50 is supplied to the downcomer 12 through the coolant injection portion 14 of the reactor vessel 10. A check valve 75 is provided on the pipe 66 connecting the reactor vessel 10 and the coolant tank 50 to prevent coolant flow in the direction of the coolant tank 50 from the reactor vessel 10. The coolant injection portions 13 and 14 connected to the hybrid safety injection tank 20 and the coolant tank 50 may be the same injection portion or individual injection portions.

The heat-exchanger 80 is located above the reactor vessel 10 and condenses the vapor generated in the reactor building. The heat-exchanger 80 may be installed on the inner wall of a reactor building or may discharge the heat outside the reactor building.

The coolant, which is condensed and generated in the heat-exchanger 80, is fed to the coolant tank 50.

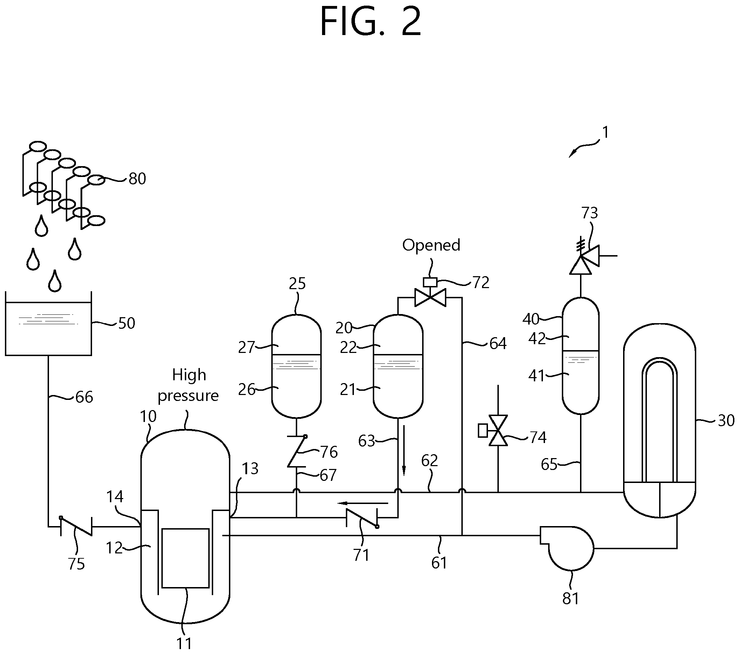

Hereinafter, an operation method of a nuclear power plant according to one embodiment of the present invention will be described with reference to FIG. 2 to FIG. 4.

Due to an accident, a situation occurs in which the coolant of the hybrid safety injection tank 20, safety injection tank 25, and coolant tank 50 must be supplied to the reactor vessel 10 in the state where the reactor vessel 10 maintains the high pressure.

According to the present invention, in this case, the method first opens the regulating valve 72 as shown in FIG. 2. When the regulating valve 72 is opened, the cold-leg 61 and the hybrid safety injection tank 20 are communicated with each other such that the hybrid safety injection tank 20 is further pressurized. Thus, the cold-leg 61 and the hybrid safety injection tank 20 have the same pressure. Further, the reactor vessel 10 is thus at the same pressure as that of the hybrid safety injection tank 20.

When the reactor vessel 10 and the hybrid safety injection tank 20 are at the same pressure, the coolant of the hybrid safety injection tank 20 is supplied to the reactor vessel 10 due to the water head differential. The coolant of the hybrid safety injection tank 20 is supplied to the downcomer 12 through the coolant injection portion 13 provided on the side wall of the reactor vessel 10.

The regulating valve 72 may be opened by manipulation of operator or by automatic operation. For this purpose, a battery may be installed and used if necessary.

As described above, in accordance with the present invention, the hybrid safety injection tank 20 is connected to the cold-leg 61. When the hybrid safety injection tank 20 is connected to the pressurizer 40, the pressure of the hybrid safety injection tank 20 may be reduced in an emergency event by opening the pressure-relief valve 73. This problem does not occur when the hybrid safety injection tank 20 is connected to the cold-leg 61 in accordance with the present invention. That is, the hybrid safety injection tank 20 according to the present invention is not affected by the operation of the pressure relief valve 73 at the emergency injection timing.

Further, even when the hybrid safety injection tank 20 is connected to the high-temperature pipe 62, the pressure of the hybrid safety injection tank 20 may be reduced in an emergency event by opening the pressure-relief valve 73. However, since the pressure change of the cold-leg 61 due to the operation of the pressure-relief valve 73 is not large, the pipe 61 can supply coolant efficiently in an emergency event.

In the nuclear power plant, only one pressurizer 40 is installed, whereas each of the cold-leg 61, the high-temperature pipe 62 and the hybrid safety injection tank 20 may be provided in a plural manner. Thus, connecting a plurality of hybrid safety injection tanks 20 to a single pressurizer 40 results in a long and complicated pipe structure. According to the present invention, each hybrid safety injection tank 20 is connected to an adjacent cold-leg 61, the pipe is short and simple, and the shapes of the pipes may be the same.

As described above, after the supply of the coolant of the hybrid safety injection tank 20, and when further cooling is required, the coolant of the coolant tank 50 is supplied to the reactor vessel 10.

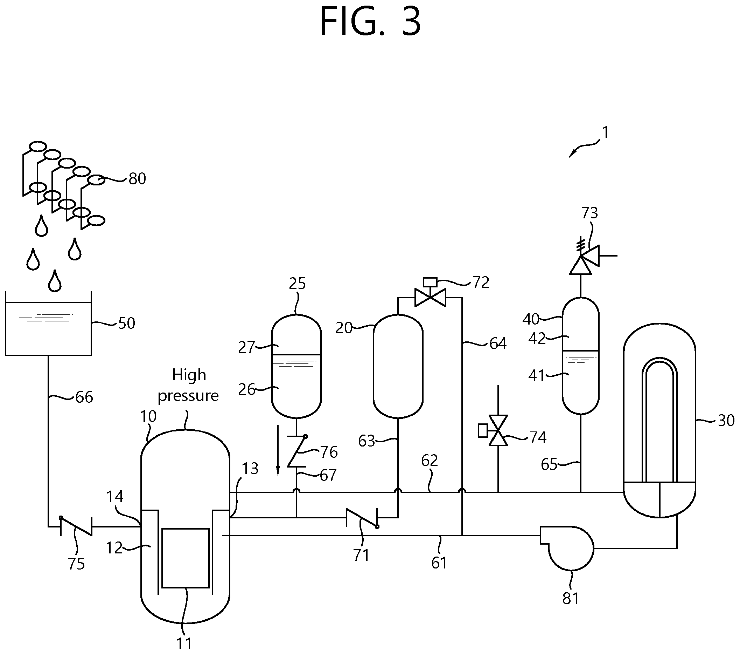

Next, as shown in FIG. 3, when the pressure of the reactor vessel 10 is lowered to be lower than the pressurizing gas of the safety injection tank 25, the check valve 76 is opened. Accordingly, the coolant of the safety injection tank 25 is supplied to the reactor vessel 10. In another embodiment, pressure reduction of the reactor vessel 10 through the opening of the pressure relief valve 73 may be required to provide the coolant of the safety injection tank 25.

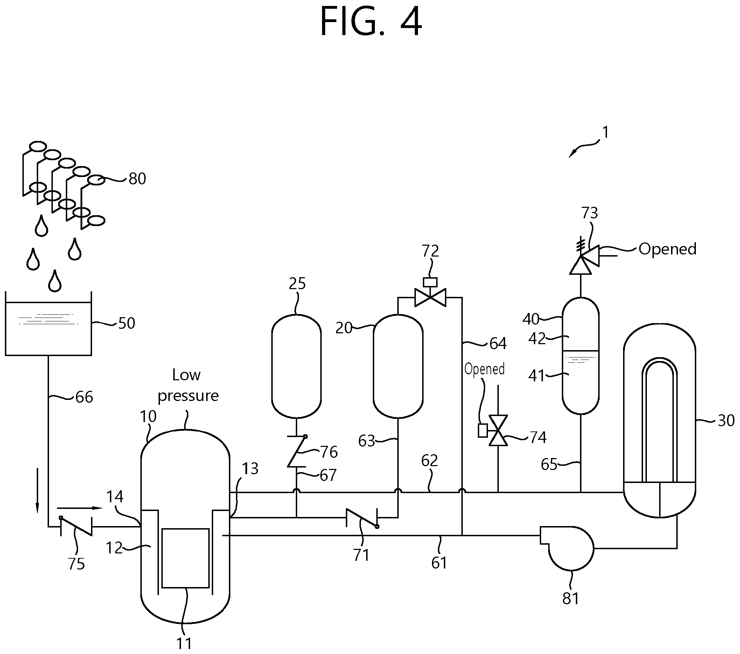

Then, the method opens the pressure relief valve 73 and the pressure-reducing valve 74 as shown in FIG. 4 to supply the coolant of the coolant tank 50. The opening order of the pressure relief valve 73 and the pressure-reducing valve 74 is not limited to a specific order. In one example, and the opening operations thereof may occur simultaneously.

The opening of the pressure relief valve 73 and the pressure-reducing valve 74 may be accomplished by manipulation of operator or by automatic operation. For this purpose, a battery may be installed and used if necessary.

By opening the pressure relief valve 73 and the pressure-reducing valve 74, the pressure of the pressurizer 40 and the high-temperature pipe 62 becomes close to the atmospheric pressure so that the pressure of the reactor vessel 10 becomes close to the atmospheric pressure. The pressure-reducing valve 74 is characterized by a larger effective releasing area than those of the pressure relief valve 73 and pressurizer connection pipe 65. Thus, the operation of the pressure-reducing valve 74 causes a rapid pressure drop in the reactor vessel 10. The pressure-reducing valve 74 may be installed on at least one high-temperature pipe.

In this situation, the coolant of the coolant tank 50 is supplied to the reactor vessel 10 due to the water head differential. In an emergency event, the temperature of the upper portion of the reactor vessel 10 is the highest. The coolant is supplied through the side portion of the reactor vessel 10 to increase the reactor core cooling capacity.

The discharged steam through the leakage points of the cold-leg 61 and the hot-leg 62, and the valves 73 and 74 condenses on the cold surface of the heat-exchanger 80. The condensed condensate is collected in the coolant tank 50. The heat-exchanger 80 discharges the heat inside the reactor building out of the building, thereby reducing the temperature and pressure inside the reactor building.

Since the coolant supply from the coolant tank 50 as described above is performed without the operation of a pump, the coolant may be supplied when the power (AC power) is interrupted.

The embodiments as described above are illustrative of the present invention, and the present invention is not limited thereto. It will be understood by those skilled in the art that various changes in form and details may be made therein without departing from the scope of the present invention as defined by the appended claims.

## Claims

1. A nuclear power plant (1) with improved cooling performance, the plant comprising:
a reactor vessel (10) containing a reactor core (11);
a hot-leg (62) and a cold-leg (61) extending from the reactor vessel (10);
a hybrid safety injection tank (20) for containing coolant therein, wherein the hybrid safety injection tank (20) is connected to the cold-leg (61) and the reactor vessel (10), and the hybrid safety injection tank (20) is located above the reactor core (11);
a coolant tank (50) connected to the reactor vessel (10) and positioned above the reactor core (11); and
a pressure-reducing valve (74) connected to the hot-leg (62);
a pressurizer (40) connected to the hot-leg (62);
a pressure relief valve (73) connected to the pressurizer (40),
wherein a lower space (41) of the hybrid safety injection tank (20) is filled with the coolant;
wherein the hybrid safety injection tank (20) is not connected to the pressurizer (40);
**characterized in that** an upper space (22) of the hybrid safety injection tank (20) is filled with pressurizing gas,
such that the hybrid safety injection tank (20) is not affected by a pressure change resulting from operation of the pressure relief valve (73).

2. The nuclear power plant of claim 1, wherein the nuclear power plant (1) further comprises a regulating valve (72) located between the hybrid safety injection tank (20) and the cold-leg (61).

3. The nuclear power plant of claim 2, wherein the reactor vessel (10) further comprises a downcomer (12), wherein the coolant of the hybrid safety injection tank (20) is supplied to the downcomer (12).

4. The nuclear power plant of claim 1, wherein the coolant of the hybrid safety injection tank (20) is supplied to a lateral face of the reactor core (11).

5. The nuclear power plant of claim 1, wherein the nuclear power plant (1) further comprises a safety injection tank (25) containing a coolant and connected to the reactor vessel (10) and positioned above the reactor core (11), wherein the safety injection tank (25) is pressurized by gas.

6. The nuclear power plant of claim 1, wherein the nuclear power plant (1) further comprises a heat-exchanger (80) to condense vapor inside a reactor building, wherein condensed water produced in the heat exchanger (80) is supplied to the coolant tank (50).

## Patentansprüche

1. Kernkraftwerk (1) mit verbesserter Kühlleistung, wobei das Kraftwerk aufweist:
einen Reaktorbehälter (10), der einen Reaktorkern (11) enthält;
einen heißen Strang (62) und einen kalten Strang (61), die sich von dem Reaktorbehälter (10) erstrecken;
einen hybriden Sicherheitseinspritzbehälter (20) zur Aufnahme von Kühlmittel, wobei der hybride Sicherheitseinspritzbehälter (20) mit dem kalten Strang (61) und dem Reaktorbehälter (10) verbunden ist und der hybride Sicherheitseinspritzbehälter (20) oberhalb des Reaktorkerns (11) angeordnet ist;
einen Kühlmittelbehälter (50), der mit dem Reaktorbehälter (10) verbunden und oberhalb des Reaktorkerns (11) angeordnet ist, und
ein Druckminderungsventil (74), das mit dem heißen Strang (62) verbunden ist;
einen Druckerzeuger (40), der mit dem heißen Strang (62) verbunden ist;
ein Überdruckventil (73), das mit dem Druckerzeuger (40) verbunden ist,
wobei ein unterer Raum (41) des hybriden Sicherheitseinspritzbehälters (20) mit dem Kühlmittel gefüllt ist;
wobei der hybride Sicherheitseinspritzbehälter (20) nicht mit dem Druckerzeuger (40) verbunden ist;
**dadurch gekennzeichnet, dass**
ein oberer Raum (22) des hybriden Sicherheitseinspritzbehälters (20) mit Druckgas gefüllt ist, so dass der hybride Sicherheitseinspritzbehälter (20) nicht von einer Druckänderung betroffen ist, die sich aus der Betätigung des Überdruckventils (73) ergibt.

2. Kernkraftwerk nach Anspruch 1, bei dem das Kernkraftwerk (1) ferner ein Regelventil (72) aufweist, das zwischen dem hybriden Sicherheitseinspritzbehälter (20) und dem kalten Strang (61) angeordnet ist.

3. Kernkraftwerk nach Anspruch 2, bei dem der Reaktorbehälter (10) ferner ein Fallrohr (12) aufweist, wobei das Kühlmittel aus dem hybriden Sicherheitseinspritzbehälter (20) dem Fallrohr (12) zugeführt wird.

4. Kernkraftwerk nach Anspruch 1, bei dem das Kühlmittel des hybriden Sicherheitseinspritzbehälters (20) zu einer Seitenfläche des Reaktorkerns (11) geleitet wird.

5. Kernkraftwerk nach Anspruch 1, bei dem das Kernkraftwerk (1) ferner einen Sicherheitseinspritzbehälter (25) aufweist, der ein Kühlmittel enthält und mit dem Reaktorbehälter (10) verbunden und oberhalb des Reaktorkerns (11) angeordnet ist, wobei der Sicherheitseinspritzbehälter (25) durch Gas unter Druck gesetzt wird.

6. Kernkraftwerk nach Anspruch 1, bei dem das Kernkraftwerk (1) ferner einen Wärmetauscher (80) zum Kondensieren von Dampf innerhalb eines Reaktorgebäudes aufweist, wobei das in dem Wärmetauscher (80) erzeugte kondensierte Wasser dem Kühlmittelbehälter (50) zugeführt wird.

## Revendications

1. Centrale nucléaire (1) avec des performances de refroidissement améliorées, la centrale comprenant :
une cuve de réacteur (10) contenant un cœur de réacteur (11) ;
une branche chaude (62) et une branche froide (61) s'étendant depuis la cuve de réacteur (10) ;
un réservoir d'injection de sécurité hybride (20) destiné à contenir un fluide de refroidissement en son sein, dans lequel le réservoir d'injection de sécurité hybride (20) est relié à la branche froide (61) et à la cuve de réacteur (10), et le réservoir d'injection de sécurité hybride (20) est situé au-dessus du cœur de réacteur (11) ;
un réservoir de réfrigérant (50) relié à la cuve de réacteur (10) et positionné au-dessus du cœur de réacteur (11) ; et
une vanne de réduction de pression (74) reliée à la branche chaude (62) ;
un pressuriseur (40) relié à la branche chaude (62) ;
une vanne de surpression (73) reliée au pressuriseur (40),
dans laquelle un espace inférieur (41) du réservoir d'injection de sécurité hybride (20) est rempli avec le réfrigérant ;
dans laquelle le réservoir d'injection de sécurité hybride (20) n'est pas relié au pressuriseur (40) ;
**caractérisée en ce qu'**un espace supérieur (22) du réservoir d'injection de sécurité hybride (20) est rempli de gaz de pressurisation,
de sorte que le réservoir d'injection de sécurité hybride (20) n'est pas affecté par un changement de pression résultant du fonctionnement de la vanne de surpression (73).

2. Centrale nucléaire selon la revendication 1, dans laquelle la centrale nucléaire (1) comprend en outre une vanne de régulation (72) située entre le réservoir d'injection de sécurité hybride (20) et la branche froide (61).

3. Centrale nucléaire selon la revendication 2, dans laquelle la cuve de réacteur (10) comprend en outre un conduit de descente (12), dans laquelle le réfrigérant du réservoir d'injection de sécurité hybride (20) est fourni au conduit de descente (12).

4. Centrale nucléaire selon la revendication 1, dans laquelle le réfrigérant du réservoir d'injection de sûreté hybride (20) est fourni à une face latérale du cœur de réacteur (11).

5. Centrale nucléaire selon la revendication 1, dans laquelle la centrale nucléaire (1) comprend en outre un réservoir d'injection de sécurité (25) contenant un réfrigérant et relié à la cuve de réacteur (10) et positionné au-dessus du cœur de réacteur (11), dans laquelle le réservoir d'injection de sécurité (25) est pressurisé par un gaz.

6. Centrale nucléaire selon la revendication 1, dans laquelle la centrale nucléaire (1) comprend en outre un échangeur de chaleur (80) pour condenser de la vapeur à l'intérieur d'un bâtiment de réacteur, dans laquelle l'eau condensée produite dans l'échangeur de chaleur (80) est fournie au réservoir de réfrigérant (50).
